# EUROPEAN PATENT APPLICATION

(11) **EP 2 560 465 A1**
(43) Date of publication of application: **20.02.2013**
(21) Application number: 11864139.8
(22) Date of filing: 06.12.2011
(51) Int. Cl.: H05B 41/295

(54) **PREHEATING CIRCUIT APPLIED TO FLUORESCENT LAMP ELECTRONIC BALLAST**

(30) Priority: 29.04.2011 CN 201120133859 U
(71) Applicant: Wujiang Huaneng Electronic Co., Ltd, Wujiang, Jiangsu 215231 (CN)
(72) Inventor: LUO, Ma, Shanghai 200040 (CN); ZHANG, Shunfa, Shanghai 200040 (CN); ZHOU, Zhengguo, Shanghai 200040 (CN); GAO, Chao, Wujiang Jiangsu 215231 (CN)
(74) Representative: ABG Patentes, S.L.
(86) International application number: PCT/CN2011/083497
(87) International publication number: WO 2012/146029

(57) **Abstract**

The present invention discloses a preheat circuit for electronic ballast of fluorescent lamp, comprising a diode and a first capacitor which are connected in series with each other and then connected in parallel with the secondary winding of magnetic loop, a third resistor and a second capacitor which are connected in series with each other and then connected in parallel with the first capacitor, a first control switch that is connected in parallel with the series branch composed of the diode and the first capacitor, and a second control switch that is connected in parallel with the series branch composed of the third resistor and the second capacitor; when the self-excited magnetic loop driving circuit starts up, the first capacitor and the second capacitor will be charged in turn, and the first control switch and the second control switch will be alternately closed and opened. The preheat circuit provided in the present invention drives the electrical current in the secondary side of the magnetic loop via the control switch to change the working frequency of the half-bridge circuit, so as to control the voltage between both ends of the lamp, thereby the preheat startup of lamp is achieved; there is no additional energy consumption and therefore the efficiency of ballast is improved..

## Description

### Field of the Invention

The present invention relates to an electronic ballast of fluorescent lamp.

### Background of the Invention

Fluorescent lamps are usually driven by electronic ballasts. At present, a self-excited magnetic loop driving circuit is broadly used in electronic ballasts. However, the circuit is an instantaneous startup circuit without lamp preheating function, therefore the switch life of the lamp is shorter. In the prior art, the preheat start of lamp can be achieved by adding PTC thermistors at both output ends; though this approach can effectively improve the switch life of lamp, the PTC thermistors consume some additional energy when the lamp operates normally, accordingly, the efficiency of the ballast is decreased.

### Summary of the Invention

The present invention aims to provide a preheat circuit for electronic ballast, which has no additional energy consumption.

To achieve the above-mentioned object, the technical solution adopted by the present invention is: a preheat circuit for electronic ballast of fluorescent lamp, wherein, the circuit of electronic ballast includes a self-excited magnetic loop driving circuit and a half-bridge power output circuit, the self-excited magnetic loop driving circuit comprises a secondary winding of magnetic loop, a first driving resistor and a second driving resistor connected in series with each other between the two ends of the secondary winding of magnetic loop, and a power transistor with a base electrode connected between the first driving resistor and the second driving resistor; the preheat circuit is arranged between the self-excited magnetic loop driving circuit and the half-bridge power output circuit, and the preheat circuit comprises a diode and a first capacitor which are connected in series with each other and then connected in parallel with the secondary winding of magnetic loop, a third resistor and a second capacitor which are connected in series with each other and then connected in parallel with the first capacitor, a first control switch that is connected in parallel with the series branch composed of the diode and the first capacitor, and a second control switch that is connected in parallel with the series branch composed of the third resistor and the second capacitor; when the self-excited magnetic loop driving circuit starts up, the first capacitor and the second capacitor will be charged in turn, and the first control switch and the second control switch will be closed and opened alternately.

In a further embodiment of the above-mentioned technical solution, the high voltage end of the first capacitor is electrically connected with the first control switch via a fourth resistor.

The high voltage end of the second capacitor is electrically connected with the second control switch via a fifth resistor or a diode or a voltage regulator tube.

### Beneficial effect

Owing to the above technical solution, the present invention has the following advantages: the preheat circuit provided in the present invention drives the electrical current in the secondary side of the magnetic loop via the control switch to change the working frequency of the half-bridge circuit, so as to control the voltage between both ends of the lamp and thereby achieves preheat startup of the lamp without additional energy consumption, therefore the efficiency of ballast is improved.

### Brief Description of the Drawings

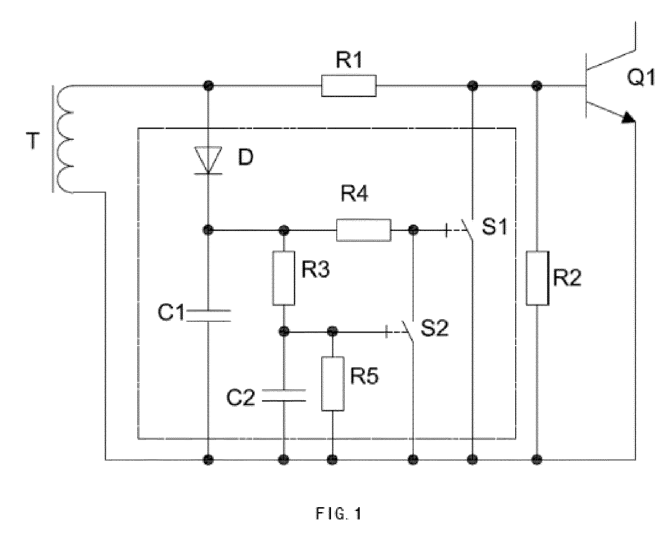

Figure 1 is a circuit diagram of the preheat circuit according to an embodiment of the present invention;

### Detailed Description of the Embodiments

The preferred embodiment of the present invention will be described below with reference to the drawing:
Figure 1 shows part of the built-up circuit of electronic ballast, which mainly comprises a self-excited magnetic loop driving circuit and a preheat circuit, wherein, the self-excited magnetic loop driving circuit comprises a secondary winding T of magnetic loop, a first driving resistor R1 and a second driving resistor R2 connected in series with each other between the two ends of the secondary winding T of magnetic loop, a power transistor Q1 with a base electrode connected between the first driving resistor R1 and the second driving resistor R2 and an emitting electrode connected with the other end of the second driving resistor R2.

The preheat circuit comprises a diode D and a first capacitor C 1 which are connected in series with each other and then connected in parallel with the secondary winding T of magnetic loop, a third resistor R3 and a second capacitor C2 which are connected in series with each other and then connected in parallel with the first capacitor C1, a first control switch S 1 that is connected in parallel with the series branch composed of the diode D and the first capacitor C1, and a second control switch S2 that is connected in parallel with the series branch composed of the third resistor R3 and the second capacitor C2; the high voltage end of the first capacitor C1 is electrically connected with the first control switch S 1 via a fourth resistor R4, and the high voltage end of the second capacitor C2 is electrically connected with the second control switch S2 via a fifth resistor R5 or a diode or a voltage regulator tube. The first control switch S1 and the second control switch S2 are transistors or field-effect tubes.

The working principle of the preheat circuit according to the embodiment will be described as follows:
When the self-excited magnetic loop driving circuit starts working, it charges the first capacitor C1 through the diode D, and charges the second capacitor C2 through the third resistor R3 at the same time; before the voltage of the second capacitor C2 rises to a value big enough to close the second control switch S2, the voltage of the first capacitor C 1 rises to a value big enough to close the first control switch S 1 via the fourth resistor R4; at that moment, the working frequency of the half-bridge circuit can be controlled by controlling the driving current in the secondary winding of magnetic loop, and thereby the object of preheating lamp can be achieved. When the voltage of the second capacitor C2 rises to a value big enough to close the second control switch S2 and break the first control switch S1, the control on the driving current in the secondary winding of magnetic loop will be stopped, so that the self-excited circuit can trip normally and light up the lamp.

In the embodiment, the preheat circuit changes the working frequency of the half-bridge circuit by controlling the electrical current in the secondary side of the magnetic loop, so as to control the voltage between both ends of the lamp and thereby achieve preheat startup of the lamp. The is no additional energy consumption, and the preheat effect is better than the effect of PTC preheat, thereby the efficiency of the entire electronic ballast is improved.

In the above, the preheat circuit of the present invention is illustrated and described in combination with example. The preheat circuit can be used in the electronic ballasts of the fluorescent lamps. With regard to other circuit parts of electronic ballast, such as filtering circuit, rectifying circuit, and output circuit, etc., the existing circuits can be adopted, which will not be described here. Any equivalent alternation or modification based on the present invention shall be deemed as falling into the protected scope of the present invention.

## Claims

1. A preheat circuit for electronic ballast of fluorescent lamp, the electronic ballast circuit comprising a self-excited magnetic loop driving circuit and a half-bridge power output circuit, the self-excited magnetic loop driving circuit comprising a secondary winding (T) of magnetic loop, a first driving resistor (R1) and a second driving resistor (R2) connected in series with each other between the two ends of the secondary winding (T) of magnetic loop, and a power transistor (Q1) with base electrode connected between the first driving resistor (R1) and the second driving resistor (R2), wherein, the preheat circuit is arranged between the self-excited magnetic loop driving circuit and the half-bridge power output circuit, and comprises a diode (D) and a first capacitor (C1) which are connected in series with each other and then connected in parallel with the secondary winding (T) of magnetic loop, a third resistor (R3) and a second capacitor (C2) which are connected in series with each other and then connected in parallel with the first capacitor (C1), a first control switch (S1) that is connected in parallel with the series branch composed of the diode (D) and the first capacitor (C1), and a second control switch (S2) that is connected in parallel with the series branch composed of the third resistor (R3) and the second capacitor (C2); when the self-excited magnetic loop driving circuit starts up, the first capacitor (C1) and the second capacitor (C2) will be charged in turn, and the first control switch (S1) and the second control switch (S2) will be alternately closed and opened.

2. The preheat circuit for electronic ballast of the fluorescent lamp according to claim 1, wherein, the high voltage end of the first capacitor (C1) is electrically connected with the first control switch (S1) via a fourth resistor (R4).

3. The preheat circuit for electronic ballast of the fluorescent lamp according to claim 1 or 2, wherein, the high voltage end of the second capacitor (C2) is electrically connected with the second control switch (S2) via a fifth resistor (R5) or a diode or a voltage regulator tube.

4. The preheat circuit for electronic ballast of the fluorescent lamp according to claim 1, wherein, the first control switch (S1) and the second control switch (S2) are transistors or field effect tubes.
